# EUROPEAN PATENT APPLICATION

(11) **EP 4 842 070 A1**
(43) Date of publication of application: **18.11.2026**
(21) Application number: 24916077.1
(22) Date of filing: 12.01.2024
(51) Int. Cl.: H04W 48/08

(54) **REGISTRATION METHOD AND APPARATUS FOR ENVIRONMENTAL ENERGY SUPPLY DEVICE, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: RGTH
(86) International application number: PCT/CN2024/072017
(87) International publication number: WO 2025/148008

(57) **Abstract**

A registration method and apparatus for an environmental energy supply device, and a device and a storage medium, which relate to the technical field of communications. The method is executed by an environmental energy supply device. The method comprises: sending first information to a first control device, wherein the first information is used for requesting access to a first control device, and the first control device is used for performing information interaction with an environmental energy supply device (310). In the method, an environmental energy supply device sends, to a first control device, first information used for requesting access to the first control device, such that the environmental energy supply device can establish an association relationship with the first control device, and the first control device can manage the environmental energy supply device on the basis of the association relationship established with the environmental energy supply device, thereby effectively preventing problems such as the loss of an environmental energy supply device.

## Description

### TECHNICAL FIELD

Embodiments of the present application relate to the field of communication technologies, and more particularly, to a registration method of an ambient energy supply device, a registration apparatus of an ambient energy supply device, a communication device, and a storage medium.

### BACKGROUND

An ambient energy supply device, such as a low-power sensor, a passive tag, etc., generally does not have a stable energy supply like mains electricity, nor does it come with a battery capable of long-term energy supply. Instead, the ambient energy supply device relies on harvesting ambient energy (including but not limited to light energy, thermal energy, mechanical energy, and electromagnetic energy) to provide the energy required for its own circuit operation and information interaction with the outside world. Due to the low level of ambient energy, the ambient energy supply device needs a relatively long time to harvest and store enough energy for a single cycle of data collection and communication. Therefore, the ambient energy supply device cannot operate continuously. How to manage the ambient energy supply device remains still requires further discussion and research.

### SUMMARY OF THE INVENTION

Embodiments of the present application provide a registration method of an ambient energy supply device, a registration apparatus of an ambient energy supply device, a communication device, and a storage medium. The technical solutions are as follows.

According to one aspect of the embodiments of the present application, a registration method of an ambient energy supply device is provided, where the method is performed by the ambient energy supply device, and the method includes:
transmitting first information to a first control device, where the first information is used to request access to the first control device, and the first control device is used to perform information interaction with the ambient energy supply device.

According to one aspect of the embodiments of the present application, a registration method of an ambient energy supply device is provided, where the method is performed by a first control device, and the method includes:
receiving first information transmitted by the ambient energy supply device, where the first information is used to request access to the first control device, and the first control device is used to perform information interaction with the ambient energy supply device.

According to one aspect of the embodiments of the present application, a registration apparatus of an ambient energy supply device is provided, where the apparatus includes:
a transmitting module, configured to transmit first information to a first control device, where the first information is used to request access to the first control device, and the first control device is used to perform information interaction with the ambient energy supply device.

According to one aspect of the embodiments of the present application, a registration apparatus of an ambient energy supply device is provided, where the apparatus includes:
a receiving module, configured to receive first information transmitted by the ambient energy supply device, where the first information is used to request access to the first control device, and the first control device is used to perform information interaction with the ambient energy supply device.

According to one aspect of the embodiments of the present application, a communication device is provided, which includes a processor and a memory, where a computer program is stored in the memory, and the processor executes the computer program to implement the aforementioned registration of the ambient energy supply device. The communication device is an ambient energy supply device, or the communication device is a first control device.

According to one aspect of the embodiments of the present application, a computer-readable storage medium is provided, where the storage medium has stored therein a computer program, and the computer program is configured to be executed by a processor to implement the aforementioned registration of the ambient energy supply device.

According to one aspect of the embodiments of the present application, a chip is provided, which includes a programmable logic circuit and/or program instructions, where the chip is configured to, when running, implement the aforementioned registration of the ambient energy supply device.

According to one aspect of the embodiments of the present application, a computer program product is provided, which includes computer instructions, where the computer instructions are stored in a computer-readable storage medium, a processor obtains the computer instructions from the computer-readable storage medium and executes the computer instructions to implement the aforementioned registration of the ambient energy supply device.

The technical solutions provided in the embodiments of the present application may include the following beneficial effects:
since the ambient energy supply device transmits, to the first control device, the first information used to request access to the first control device, the ambient energy supply device is enabled to establish an association relationship with the first control device. The first control device may realize management of the ambient energy supply device based on the association relationship established with the ambient energy supply device, thereby effectively avoiding problems such as loss of the ambient energy supply device.

### BRIEF DESCRIPTION OF THE DRAWINGS

FIG. 1 is a schematic diagram of a network architecture provided in an embodiment of the present application.
FIG. 2 is a schematic diagram of a working manner of a wireless internet of things system using electromagnetic wave energy harvesting provided in an embodiment of the present application.
FIG. 3 is a flowchart of a registration method of an ambient energy supply device provided in an embodiment of the present application.
FIG. 4 is a block diagram of a registration apparatus of an ambient energy supply device provided in an embodiment of the present application.
FIG. 5 is a block diagram of a registration apparatus of an ambient energy supply device provided in another embodiment of the present application.
FIG. 6 is a schematic structural diagram of an ambient energy supply device provided in an embodiment of the present application.
FIG. 7 is a schematic structural diagram of a first control device provided in an embodiment of the present application.

### DETAILED DESCRIPTION OF THE EMBODIMENTS

To make the objectives, technical solutions, and advantages of the present application clearer, the embodiments of the present application will be described in further detail below with reference to the accompanying drawings.

The network architecture and service scenarios described in the embodiments of the present application are intended to illustrate the technical solutions of the embodiments of the present application more clearly, and do not constitute a limitation on the technical solutions provided in the embodiments of the present application. A person of ordinary skill in the art will understand that with the evolution of network architectures and the emergence of new service scenarios, the technical solutions provided in the embodiments of the present application are equally applicable to similar technical problems.

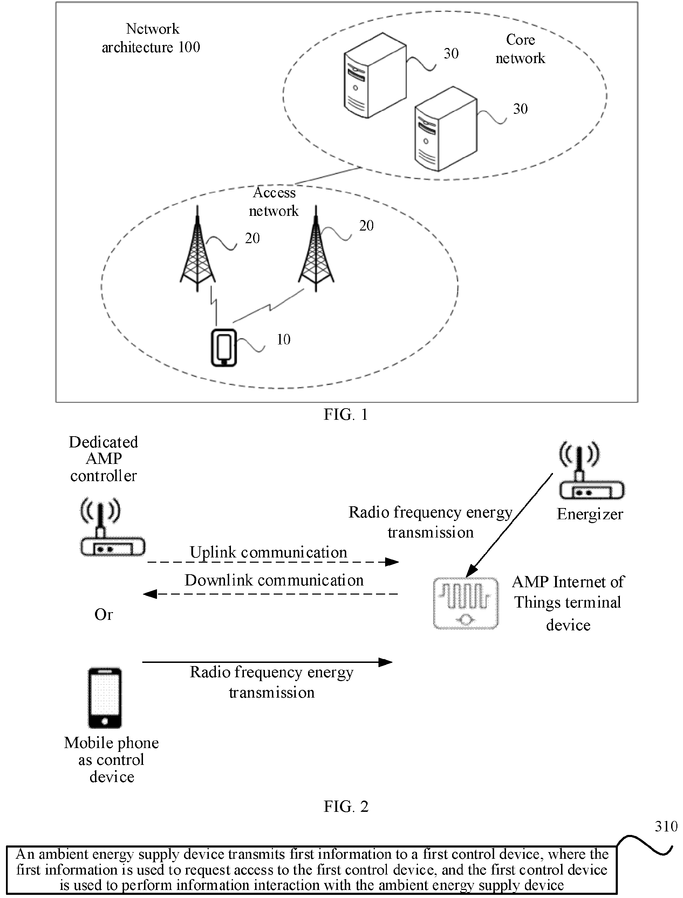

Please refer to FIG. 1, which illustrates a schematic diagram of a network architecture 100 provided in an embodiment of the present application. The network architecture 100 may include: a terminal device 10, an access network device 20, and a core network element 30.

The terminal device 10 may be referred to as a user equipment (UE), a station (STA), an access terminal, a user unit, a user station, a mobile station, a mobile terminal, a remote station, a remote terminal, a mobile device, a wireless communication device, a user agent, or a user apparatus. In some embodiments, the terminal device 10 may also be a cellular phone, a cordless telephone, a session initiation protocol (SIP) phone, a wireless local loop (WLL) station, a personal digital assistant (PDA), a handheld device with a wireless communication function, a computing device or other processing devices connected to a wireless modem, an in-vehicle device, a wearable device, a terminal device in a 5th generation system (5GS), or a terminal device in a future evolved public land mobile network (PLMN), etc., which is not limited in the embodiments of the present application. For convenience of description, the above-mentioned devices are collectively referred to as terminal devices. The number of terminal devices 10 is typically multiple, and one or more terminal devices 10 may be distributed within the cell managed by each access network device 20. The terminal device may also be simply referred to as a terminal or UE, and those skilled in the art may understand its meaning.

The access network device 20 is a device deployed in an access network to provide wireless communication functions for the terminal device 10. The access network device 20 may include various forms of macro base stations, micro base stations, relay stations, access points (APs), etc. In systems using different radio access technologies, the names of devices with access network device functions may vary. For example, in a 5G new radio (NR) system, it is called a next generation node B (gNodeB or gNB). With the evolution of communication technologies, the name "access network device" may change. For convenience of description, in the embodiments of the present application, the aforementioned apparatus that provides wireless communication functions for the terminal device 10 is collectively referred to as an access network device. In some embodiments, a communication relationship may be established between the terminal device 10 and the core network element 30 through the access network device 20. Exemplarily, in a long term evolution (LTE) system, the access network device 20 may be an evolved universal terrestrial radio access network (EUTRAN) or one or more eNodeBs in the EUTRAN; in a 5G NR system, the access network device 20 may be a radio access network (RAN) or one or more gNBs in the RAN. In the embodiments of the present application, unless otherwise specified, the "network device" refers to the access network device 20, such as a base station.

The core network element 30 is a network element deployed in the core network. The functions of the core network element 30 are mainly to provide user connection, user management, and bearer for services, serving as a bearer network to provide an interface to an external network. For example, core network elements in the 5G NR system may include an access and mobility management function (AMF) entity, a user plane function (UPF) entity, a session management function (SMF) entity, and other network elements.

In some embodiments, the access network device 20 and the core network element 30 communicate with each other through a certain air interface technology, such as an NG interface in the 5G NR system. The access network device 20 and the terminal device 10 communicate with each other through a certain air interface technology, such as a Uu interface.

The "5G NR system" in the embodiments of the present application may also be referred to as a 5G system or an NR system, and those skilled in the art may understand its meaning. The technical solutions described in the embodiments of the present application may be applicable to the LTE system, the 5G NR system, as well as a subsequent evolved system of 5G NR system (e.g., beyond 5G (B5G) system, 6th generation (6G) system), and may also be applicable to other communication systems such as a narrow band internet of things (NB-IoT) system, which is not limited in the present application.

In the embodiments of the present application, a network device may provide service for a cell, and a terminal device communicates with the network device through transmission resources (e.g., frequency domain resources, or spectrum resources) on a carrier used by the cell. The cell may be a cell corresponding to the network device (e.g., a base station). The cell may belong to a macro base station or a base station corresponding to a small cell. The small cell here may include: a metro cell, a micro cell, a pico cell, a femto cell, etc. These small cells have the characteristics of small coverage and low transmission power, and are suitable for providing high-rate data transmission services.

Before introducing the technical solutions of the present application, some related technical knowledge involved in the present application is introduced and explained. The following related technologies, serving as optional solutions, may be arbitrarily combined with the technical solutions of the embodiments of the present application, and all such combinations shall fall within the protection scope of the embodiments of the present application. The embodiments of the present application include at least part of the following content.

An ambient-energy-supply internet of things device, such as a low-power sensor, a passive tag, etc., generally does not have a stable energy supply like mains electricity, nor does it come with a battery capable of long-term energy supply. Instead, the ambient-energy-supply internet of things device relies on harvesting ambient energy (including but not limited to light energy, thermal energy, mechanical energy, and electromagnetic energy) to provide the energy required for its own circuit operation and information interaction with the outside world. The biggest advantage of this design is that the deployment position is not limited by the power supply line, and there is no need to periodically replace the battery in the internet of things device. The device size may be made very small, and because there is no power supply part, reliability is also improved, the device has a long service life, and the overall system construction cost and maintenance cost are low. On the other hand, the total amount and efficiency of ambient energy harvesting are limited by the scenario and device size, and are generally relatively small, ranging from microwatts to milliwatts, which limits the complexity, transmission power, and communication distance of the device's processing circuit. Additionally, some energy harvesting technologies (e.g., electromagnetic wave energy harvesting) have the low level of ambient energy and require a relatively long time to harvest and store enough energy for a single cycle of data collection and communication, so they cannot work continuously, for example, reporting information only every few hours. In summary, the ambient-energy-supply internet of things technology is more suitable for application scenarios with a large number of devices within a limited range, requiring long life, low cost, maintenance-free automatic operation, such as environmental monitoring, factory safety production, warehousing, logistics and retail, item positioning and tracking, etc., and the ambient-energy-supply Internet of Things technology achieves complementarity with the mains electricity-energy-supply internet of things device or battery-energy-supply internet of things device.

Among various ambient energies, an energy supply manner such as light energy, thermal energy, and mechanical energy are often limited by the environment, for example, the energy supply manner requires time-limited or location-limited energy sources like sunlight or light irradiation, operating mechanical equipment, heat generated by the operation of other equipment, etc., which imposes limitations on the deployment. However, electromagnetic wave energy supply only requires a certain electromagnetic wave power in an appropriate frequency band, such as 900 MHz, and a radio frequency energizer may be deployed if necessary to achieve radio frequency energy harvesting, so the electromagnetic wave energy supply may be deployed more widely. The present application mainly discusses the electromagnetic wave energy supply manner, and the main inventive points are also applicable to other energy supply manners.

A schematic diagram of a working manner of a wireless internet of things system using electromagnetic wave energy harvesting is illustrated in FIG. 2. The energizer is an optional device, and the energizer is deployed when the radio frequency energy emitted by the controller is insufficient. In this case, the interaction between the controller and the internet of things device mainly involves communication (control signaling and data transmission). The frequency of the electromagnetic wave used for communication and the frequency of the electromagnetic wave used for radio frequency energy transmission may be the same or different. An example of an application scenario is that communication uses a 2.4 GHz industrial scientific medical (ISM) unlicensed band, and radio frequency energy transmission uses a 900 MHz band. It should be noted that due to compliance requirements in the field of electromagnetic radiation human safety, the transmission power of the controller and energizer cannot be increased indefinitely and must meet the restrictions and requirements of national regulations.

For an internet of things system of electromagnetic wave energy harvesting, because propagation characteristics determine that electromagnetic waves attenuate with increasing propagation distance, the obstacle in the deployment environment such as a wall, a surrounding object also causes penetration loss as well as loss caused by refraction, reflection, and scattering of the electromagnetic wave. For ambient energy harvesting internet of things devices deployed at different positions, the variations in the paths between their locations and the relatively fixed-position controller and energizer lead to different energy losses of electromagnetic wave propagation. Consequently, for these the ambient energy harvesting internet of things devices, the efficiency of energy harvesting, as well as the minimum uplink transmission power required to ensure reliable signal transmission to the controller (to overcome the effect of the path loss) also differ.

As described above, three possible internet of things working scenarios are analyzed below.
1. The internet of things device has sufficient or relatively sufficient power supply:
   a) connected to the mains electricity. In this case, the device may operate continuously without the need to prioritize energy saving; and,
   b) the device has a large-capacity built-in battery, for example, the NB-IoT technology. The device may operate according to the designed working manner during its life cycle (e.g., working at a low duty-cycle to save energy and extend battery life), without the need to consider harvesting ambient energy.
2. The internet of things device has no energy storage apparatus and relies on a reader/energizer to provide sufficient energy for timely communication, a typical example is a passive radio-frequency identification (RFID) tag. In this case, only when the reader/energizer starts to transmit electromagnetic waves for energy supply (generally continuous waves) can the device circuit obtain energy and start working. The working distance is short-range (related to the reader's transmission power, antenna gain, and receiving sensitivity, as well as the tag's circuit power consumption, antenna gain, and receiving sensitivity, typically on the order of ~10 meters). There is no need for a long-term energy accumulation process. Upon receiving the energy-supplying electromagnetic wave transmitted by the reader/energizer, the circuit may start working immediately. The device outside the coverage area does not work (in a sleep state).
3. Between scenarios 1 and 2: the internet of things device is not connected to a reliable power source but has an energy storage device with limited capacity (e.g., a small energy storage capacitor or a small-capacity rechargeable battery). The device is far from the reader, and the reader/controller has limited transmission power due to legal and regulatory restrictions (which may be appropriately relaxed in industry application scenarios), making it difficult to increase the range or energy level of wireless energy supply. As a result, the radio-frequency (RF) energy transmitted by the reader is insufficient to support real-time read/write operations, and it is necessary to rely on harvesting ambient energy in advance for storage (this patent only considers RF energy supply manners using readers, energizers, etc., and other energy harvesting manners such as solar energy, thermal energy, mechanical vibration energy, etc., are not discussed). One possible working scenario is that the communication distance of devices such as sensors is long, and the actual working characteristics determine that frequent read/write is not required, allowing the device to accumulate energy over a long period to support information interaction on an hourly or daily cycle, or information transmission triggered by occasional events.

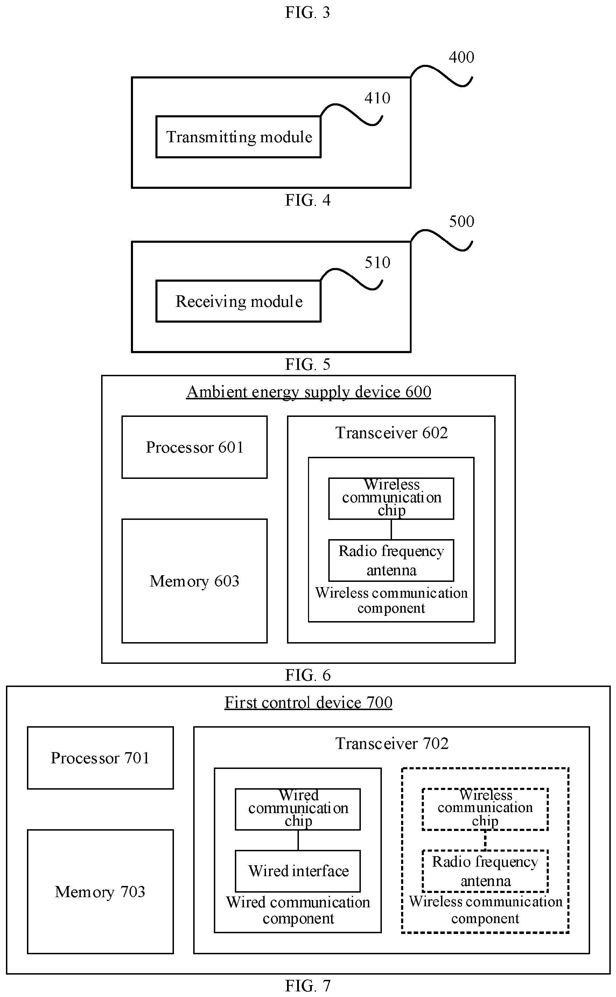

Please refer to FIG. 3, which illustrates a flowchart of a registration method of an ambient energy supply device provided in an embodiment of the present application. The method is performed by the ambient energy supply device. The method includes the following step 310.

In step 310, the ambient energy supply device transmits first information to a first control device, where the first information is used to request access to the first control device, and the first control device is used to perform information interaction with the ambient energy supply device.

Correspondingly, the first control device receives the first information transmitted by the ambient energy supply device.

In some embodiments, the ambient energy supply device obtains the required power from various ambient energy sources (micro-light energy, RF energy, micro-kinetic energy, temperature difference energy), and the collected energy is optimized and stored by micro-energy management technology, ultimately achieving a state where the device supplies its own energy. Exemplarily, the ambient energy supply device may be a passive tag, such as an RFID.

In some embodiments, the first control device is used to perform information interaction with the ambient energy supply device. Exemplarily, the ambient energy supply device is used to collect environmental information, such as humidity, temperature, and other environmental data, and the first control device is used to read the environmental information collected by the ambient energy supply device. Exemplarily, the first control device may be a reader.

In some embodiments, the first control device is further used to provide energy to the ambient energy supply device. Exemplarily, the first control device transmits a wireless signal for energy supply to the ambient energy supply device, and the ambient energy supply device receives the wireless signal and obtains the energy.

In some embodiments, the first control device is further used to control at least one energy supply device, where the at least one energy supply device is used to provide energy to the ambient energy supply device. Exemplarily, the first control device controls the at least one energy supply device to transmit a wireless signal for energy supply to the ambient energy supply device, and the ambient energy supply device receives the wireless signal and obtains the energy. In some embodiments, the energy supply device is specifically used to transmit wireless signals for energy supply.

In some embodiments, in a case where an energy level of the ambient energy supply device reaches a second threshold, the ambient energy supply device transmits the first information to the first control device. In some embodiments, the second threshold is a preset threshold value. In some embodiments, the second threshold may be predefined, preconfigured, or determined by the ambient energy supply device based on its own implementation, which is not limited in the present application.

In some embodiments, the first information includes at least one of: an access type, identification information of the ambient energy supply device, an energy level of the ambient energy supply device, timestamp information of the ambient energy supply device, or a sleep time of the ambient energy supply device.

In some embodiments, the access type refers to a type by which the ambient energy supply device accesses the first control device. Exemplarily, the access type may include initial access. For example, when the ambient energy supply device is first put into use, the process of accessing the first control device is referred to as initial access.

In some embodiments, the identification information of the ambient energy supply device is used to uniquely identify the ambient energy supply device. Exemplarily, the identification information of the ambient energy supply device may be an identity document (ID) of the ambient energy supply device, or the identification information of the ambient energy supply device may be determined based on the ID of the ambient energy supply device.

In some embodiments, the energy level of the ambient energy supply device refers to the energy stored in the ambient energy supply device.

In some embodiments, the timestamp information of the ambient energy supply device refers to a time of a clock locally maintained by the ambient energy supply device. In some embodiments, to reduce the power required to transmit the first information, the timestamp information of the ambient energy supply device may be a truncated time. Exemplarily, the timestamp information of the ambient energy supply device may only include information of minutes and seconds.

In some embodiments, to further reduce the power consumption of the ambient energy supply device, after transmitting the first information to the first control device, the ambient energy supply device enters a sleep state.

In some embodiments, the first information further includes the sleep time of the ambient energy supply device. In some embodiments, the sleep time of the ambient energy supply device may be the length of the sleep time of the ambient energy supply device, or the time when the ambient energy supply device wakes up after sleeping, which is not limited in the present application.

In some embodiments, the sleep time of the ambient energy supply device may be in units of time (e.g., minutes, seconds) or in units of the broadcast period of the first control device, which is not limited in the present application. The broadcast period of the first control device refers to the period in which the first control device transmits broadcast information. Exemplarily, the sleep time of the ambient energy supply device is 50s. Exemplarily, the sleep time of the ambient energy supply device is 127 broadcast periods.

In the technical solution provided in the embodiments of the present application, since the ambient energy supply device transmits, to the first control device, the first information used to request access to the first control device, the ambient energy supply device is enabled to establish an association relationship with the first control device. The first control device may realize management of the ambient energy supply device based on the association relationship established with the ambient energy supply device, thereby effectively avoiding problems such as loss of the ambient energy supply device.

In some embodiments, after receiving broadcast information transmitted by the first control device, the ambient energy supply device transmits the first information to the first control device based on the broadcast information.

In some embodiments, before step 310, the method further includes at least one of the following steps 320 to 330.

In step 320, the ambient energy supply device receives broadcast information respectively transmitted by at least one control device, where the broadcast information is periodic information.

In some embodiments, the at least one control device includes the first control device.

In some embodiments, in a case where the energy level of the ambient energy supply device reaches a first threshold, the ambient energy supply device receives the broadcast information respectively transmitted by the at least one control device.

In some embodiments, the first threshold is a preset threshold value. In some embodiments, the first threshold may be predefined, preconfigured, or determined by the ambient energy supply device based on its own implementation, which is not limited in the present application. In some embodiments, the first threshold is greater than or equal to the second threshold.

In some embodiments, the broadcast information includes at least one of: a broadcast period, timestamp information of the broadcast information, a broadcast message sequence number of the broadcast information, a maximum value of the broadcast message sequence number, a receiving capability of the control device, or transmission power of the broadcast information.

In some embodiments, the broadcast period refers to the period in which the first control device transmits the broadcast information. In some embodiments, the timestamp information of the broadcast information refers to the time information of transmitting the broadcast information, such as the transmission time of the broadcast information. In some embodiments, the broadcast message sequence number of the broadcast information refers to the sequence number of the broadcast information. Exemplarily, if the first control device transmits broadcast information 1 and broadcast information 2, this means that the interval between the two broadcast information is 1 broadcast period, and broadcast information 1 is transmitted earlier. In some embodiments, the broadcast message sequence number of the broadcast information may also be referred to as a timestamp sequence number of the broadcast information. Within a period of time, different pieces of broadcast information have different broadcast message sequence numbers, which are used to characterize the transmission timing of the broadcast information within the period of the time.

In some embodiments, since the broadcast information is transmitted periodically, it is impractical to maintain an infinitely large broadcast message sequence number. Therefore, a maximum value of the broadcast message sequence number may be specified. After reaching the maximum value of the broadcast message sequence number, the broadcast message sequence number corresponding to the next broadcast information is renumbered starting from the minimum value of the broadcast message sequence number. Exemplarily, if the maximum value of the broadcast message sequence number is 10 and the minimum value of the broadcast message sequence number is 1, then if the broadcast message sequence number corresponding to the first broadcast information is 10, the broadcast message sequence number of the next broadcast information is renumbered starting from 1.

In some embodiments, the receiving capability of the control device refers to the minimum received power at which the control device may correctly parse information.

In step 330, the ambient energy supply device determines the first control device in the at least one control device based on the broadcast information respectively transmitted by the at least one control device.

Correspondingly, the first control device transmits the broadcast information to the ambient energy supply device.

In some embodiments, step 330 includes at least one of the following steps 331 to 332.

In step 331, the ambient energy supply device determines, based on respective transmission power corresponding to each piece of broadcast information, a respective path loss corresponding to the each piece of broadcast information.

In some embodiments, for any one of the pieces of broadcast information, the ambient energy supply device determines, based on the transmission power of the broadcast information, the path loss corresponding to the broadcast information.

In some embodiments, for any one of the pieces of broadcast information, the ambient energy supply device determines, based on the transmission power of the broadcast information and the received power of the broadcast information, the path loss corresponding to the broadcast information.

In step 332, the ambient energy supply device determines, based on the respective path loss corresponding to the each piece of broadcast information, the first control device in the at least one control device, and determines transmission power of the first information.

In some embodiments, the ambient energy supply device determines, based on the respective path loss corresponding to the each piece of broadcast information, a control device corresponding to a piece of broadcast information with a minimum path loss as the first control device. This may reduce the transmission power of the first information and decrease the energy required for the ambient energy supply device to transmit the first information.

In some embodiments, the ambient energy supply device determines, based on the respective path loss corresponding to the each piece of broadcast information and the respective received power corresponding to the each piece of broadcast information, the first control device in the at least one control device.

In some embodiments, the ambient energy supply device determines, based on the respective path loss corresponding to the each piece of broadcast information, a control device corresponding to a piece of broadcast information with a highest received power among H pieces of broadcast information with the minimum path loss as the first control device, where H is a positive integer. This may reduce the transmission power of the first information and the energy required for the ambient energy supply device to transmit the first information, while also ensuring the stability of subsequent information interaction between the ambient energy supply device and the first control device.

In some embodiments, after determining the first control device, the ambient energy supply device determines, based on the path loss corresponding to the first control device, and the receiving capability of the control device carried in the broadcast information transmitted by the first control device, a minimum transmission power of the first information. In some embodiments, the minimum transmission power of the first information is greater than or equal to a sum of the path loss corresponding to the first control device and the receiving capability of the first control device. In some embodiments, the transmission power of the first information is greater than or equal to the minimum transmission power of the first information.

In some embodiments, step 330 further includes the following step 333.

In step 333, the ambient energy supply device calibrates a local clock based on the timestamp information of the broadcast information.

In some embodiments, since the ambient energy supply device is in a sleep state when the energy of the ambient energy supply device does not reach a certain threshold, and the ambient energy supply device does not establish a communication connection with a network device, it is unable to align the local clock of the ambient energy supply device with a clock of the network device. Consequently, the clock locally maintained by the ambient energy supply device may drift.

In some embodiments, the ambient energy supply device determines, based on the timestamp information of the broadcast information, the time information maintained by the control device corresponding to the broadcast information, and then calibrates the local clock.

In some embodiments, the aforementioned step 310 may be implemented as the following step 311.

In step 311, among N consecutive pieces of broadcast information transmitted by the first control device and received by the ambient energy supply device, in a case where there are M pieces of broadcast information successfully parsed, the first information is transmitted to the first control device, where M is a positive integer less than or equal to N, and N is a positive integer.

In some embodiments, the broadcast information transmitted by the control device and received by the ambient energy supply device may fail to be parsed for various reasons. For example, the received power of the broadcast information is too low, resulting in unsuccessful parsing. Similarly, unsuccessful parsing may also occur for other interactive information between the ambient energy supply device and the control device. Therefore, before transmitting the first information to the first control device, it is first necessary to determine the probability of unsuccessful parsing that may occur in information interaction between the ambient energy supply device and the first control device.

In some embodiments, N and M are preset. In some embodiments, N and M may be predefined, preconfigured, or determined based on the implementation of the ambient energy supply device itself, which is not limited in the present application.

Through the above method, a method for an ambient energy supply device to determine a first control device is provided, so that the ambient energy supply device may determine a suitable control device among multiple control devices, while also ensuring the stability of information interaction between the ambient energy supply device and the first control device.

In some embodiments, after receiving the first information, the first control device transmits second information to the ambient energy supply device, where the second information is used to accept an access request of the ambient energy supply device, or the second information is used to reject an access request of the ambient energy supply device.

In some embodiments, after step 310, the method further includes the following step 340.

In step 340, the ambient energy supply device receives second information transmitted by the first control device, where the second information is used to accept an access request of the ambient energy supply device, or the second information is used to reject an access request of the ambient energy supply device.

Correspondingly, the first control device transmits the second information.

In some embodiments, the first information includes timestamp information of the ambient energy supply device. After receiving the first information, the first control device determines, according to the timestamp information of the ambient energy supply device and the timestamp information of the first control device, a clock offset of the ambient energy supply device.

In some embodiments, the first control device transmits the second information to the ambient energy supply device based on the clock offset of the ambient energy supply device, to increase the success rate of the ambient energy supply device receiving the second information.

In some embodiments, after receiving the first information, the first control device establishes and maintains local identification information of the ambient energy supply device.

In some embodiments, to reduce the storage pressure of the first control device, the local identification information of the ambient energy supply device may be established and maintained locally on the first control device. In some embodiments, there is an association relationship between the local identification information of the ambient energy supply device and the identification information of the ambient energy supply device. In some embodiments, the local identification information of the ambient energy supply device may be obtained by performing a variation on the identification information of the ambient energy supply device. Exemplarily, the identification information of the ambient energy supply device is the ID of the ambient energy supply device, and the local identification information may be a variant of the ID of the ambient energy supply device, such as a hash value.

In some embodiments, the ambient energy supply device sleeps after transmitting the first information, and receives the second information transmitted by the first control device after waking from sleep.

In some embodiments, the first control device may transmit the second information multiple times to increase the success rate of the ambient energy supply device receiving the second information.

In some embodiments, a time-frequency resource for the first control device to transmit the second information is preset. In some embodiments, the first control device transmits the second information on a fixed time-frequency resource. In some embodiments, the fixed time-frequency resource may be predefined or preconfigured, which is not limited in the present application.

In some embodiments, the time-frequency resource for the first control device to transmit the second information is determined based on the identification information of the ambient energy supply device. Exemplarily, there is a mapping relationship between the identification information of the ambient energy supply device and the time-frequency resource for transmitting the second information. In some embodiments, the mapping relationship may be predefined or preconfigured, which is not limited in the present application.

In some embodiments, in a case where the second information is used to accept the access request of the ambient energy supply device, the second information includes at least one of: an access confirmation command, local identification information of the ambient energy supply device, timestamp information of the first control device, power control information, modulation and coding scheme (MCS) adjustment information, or key exchange information.

In some embodiments, the local identification information of the ambient energy supply device may be the same as or different from the identification information of the ambient energy supply device, which is not limited in the present application.

In some embodiments, to reduce data volume of the second information, the access confirmation command and/or a reject access command may be a predefined binary field. Exemplarily, if the value of the information field is 1, it represents the access confirmation command; if the value of the information field is 0, it represents the reject access command.

In some embodiments, whether the second information is used to accept or reject the access request of the ambient energy supply device may also be determined according to the data volume of the second information. Exemplarily, if the data volume of the second information is greater than a third threshold, it represents that the second information is used to accept the access request of the ambient energy supply device; if the data volume of the second information is less than the third threshold, it represents that the second information is used to reject the access request of the ambient energy supply device.

In some embodiments, whether the second information is used to accept or reject the access request of the ambient energy supply device may be determined based on the value of one or more information fields among the power control information, MCS adjustment information, and key exchange information. Exemplarily, if the value of the information field where the power control information is located is 0, it represents that the second information is used to reject the access request of the ambient energy supply device. Exemplarily, if the value of the information field where the MCS adjustment information is located is 0, it represents that the second information is used to reject the access request of the ambient energy supply device. Exemplarily, if the value of the information field where the key exchange information is located is 0, it represents that the second information is used to reject the access request of the ambient energy supply device.

In some embodiments, in a case where the second information is used to accept the access request of the ambient energy supply device, the method further includes at least one of the steps 350 to 380.

In step 350, the ambient energy supply device calibrates the local clock according to the timestamp information of the first control device.

In step 360, the ambient energy supply device adjusts transmission power of third information according to the power control information, where the third information is used for information interaction with the first control device.

In some embodiments, the third information may be any piece of interactive information between the ambient energy supply device and the first control device.

In step 370, the ambient energy supply device adjusts the modulation and coding manner of the third information according to the MCS adjustment information.

In some embodiments, the MCS adjustment information is used to indicate the modulation manner and/or coding manner of the third information.

In step 380, the ambient energy supply device encrypts data according to the key exchange information.

In some embodiments, in a case where the second information is used to reject the access request of the ambient energy supply device, the second information includes at least one of: a reject access command, identification information of the ambient energy supply device, or timestamp information of the first control device.

In some embodiments, if the first control device rejects the access request of the ambient energy supply device, it is not necessary to maintain local identification information of the ambient energy supply device. Therefore, in a case where the second information is used to reject the access request of the ambient energy supply device, the second information does not include the local identification information of the ambient energy supply device, but includes the identification information of the ambient energy supply device.

In some embodiments, in a case where the second information is used to reject the access request of the ambient energy supply device, the method further includes the following step 390.

In step 390, the ambient energy supply device transmits fourth information to a second control device, where the fourth information is used to request access to the second control device, and the second control device and the first control device are different control devices.

In some embodiments, in a case where the second control device does not exist, or in a case where a control device that accepts the access request of the ambient energy supply device does not exist, the ambient energy supply device enters a sleep state, and the second control device and the first control device are different control devices.

In some embodiments, if the ambient energy supply device fails to find a second control device that meets the condition, or all control devices reject the access request of the ambient energy supply device, the ambient energy supply device enters a sleep state.

In some embodiments, in a case where the energy level of the ambient energy supply device reaches the first threshold, or in a case where the energy level of the ambient energy supply device reaches the second threshold, the ambient energy supply device may wake up and re-execute the aforementioned process.

Through the aforementioned method, the ambient energy supply device may determine, based on the second information transmitted by the first control device, whether to access the first control device, reselect another control device, or enter a sleep state, thereby preventing the ambient energy supply device from being lost when it cannot access a control device.

In the above method embodiments, the technical solutions of the present application have been introduced and explained only from the perspective of interaction between the ambient energy supply device and the first control device. The steps performed by the ambient energy supply device described above may be independently implemented as a method for registering an ambient energy supply device on an ambient energy supply device side. The steps performed by the first control device described above may be independently implemented as a method for registering an ambient energy supply device on a first control device side. Additionally, the embodiments provided herein may be arbitrarily combined to form new embodiments, which all fall within the protection scope of the present application.

The following are apparatus embodiments of the present application, which may be used to perform the method embodiments of the present application. For details not disclosed in the apparatus embodiments of the present application, please refer to the method embodiments of the present application.

Please refer to FIG. 4, which illustrates a block diagram of a registration apparatus of an ambient energy supply device provided in an embodiment of the present application. The apparatus has the function of implementing the above example of the registration method of the ambient energy supply device. The function may be implemented by hardware, or may be implemented by hardware executing corresponding software. The apparatus may be the ambient energy supply device introduced above, or may be set up in the ambient energy supply device. As illustrated in FIG. 4, an apparatus 400 may include: a transmitting module 410.

The transmitting module 410 is configured to transmit first information to a first control device, where the first information is used to request access to the first control device, and the first control device is used to perform information interaction with the ambient energy supply device.

In some embodiments, after transmitting the first information to the first control device, the ambient energy supply device enters a sleep state.

In some embodiments, the apparatus further includes a receiving module (not illustrated in the figure).

The receiving module is configured to receive second information transmitted by the first control device, where the second information is used to accept an access request of the ambient energy supply device, or the second information is used to reject an access request of the ambient energy supply device.

In some embodiments, in a case where the second information is used to accept the access request of the ambient energy supply device, the second information includes at least one of: an access confirmation command, local identification information of the ambient energy supply device, timestamp information of the first control device, power control information, MCS adjustment information, or key exchange information.

In some embodiments, the apparatus further includes a processing module (not illustrated in the figure).

The processing module is configured to calibrate a local clock according to the timestamp information of the first control device.

The processing module is further configured to adjust transmission power of third information according to the power control information, where the third information is used for information interaction with the first control device.

The processing module is further configured to adjust a modulation and coding manner of the third information according to the MCS adjustment information.

The processing module is further configured to encrypt data according to the key exchange information.

In some embodiments, in a case where the second information is used to reject the access request of the ambient energy supply device, the second information includes at least one of: a reject access command, identification information of the ambient energy supply device, or timestamp information of the first control device.

In some embodiments, the transmitting module 410 is further configured to transmit fourth information to a second control device, where the fourth information is used to request access to the second control device, and the second control device and the first control device are different control devices.

In some embodiments, in a case where a second control device does not exist, or in a case where a control device that accepts the access request of the ambient energy supply device does not exist, the ambient energy supply device enters a sleep state, and the second control device and the first control device are different control devices.

In some embodiments, the receiving module is further configured to, in a case where an energy level of the ambient energy supply device reaches a first threshold, receive broadcast information respectively transmitted by at least one control device, where the broadcast information is periodic information.

The processing module is further configured to determine, based on the broadcast information respectively transmitted by the at least one control device, the first control device in the at least one control device.

In some embodiments, the broadcast information includes at least one of: a broadcast period, timestamp information of the broadcast information, a broadcast message sequence number of the broadcast information, a maximum value of the broadcast message sequence number, a receiving capability of the control device, or transmission power of the broadcast information.

In some embodiments, the processing module is configured to determine, based on respective transmission power corresponding to each piece of broadcast information, a respective path loss corresponding to the each piece of broadcast information; and determine, based on the respective path loss corresponding to the each piece of broadcast information, the first control device in the at least one control device, and determine transmission power of the first information.

In some embodiments, the processing module is further configured to calibrate a local clock based on the timestamp information of the broadcast information.

In some embodiments, the transmitting module 410 is configured to, among N consecutive pieces of broadcast information broadcast information transmitted by the first control device and received by the ambient energy supply device, in a case where there are M pieces of broadcast information successfully parsed, transmit the first information to the first control device, where M is a positive integer less than or equal to N, and N is a positive integer.

In some embodiments, the first information includes at least one of: an access type, identification information of the ambient energy supply device, an energy level of the ambient energy supply device, timestamp information of the ambient energy supply device, or a sleep time of the ambient energy supply device.

In some embodiments, the first control device is further used to provide energy to the ambient energy supply device; and/or,
the first control device is further used to control at least one energy supply device, where the at least one energy supply device is used to provide energy to the ambient energy supply device.

In the technical solution provided in the embodiments of the present application, since the ambient energy supply device transmits, to the first control device, the first information used to request access to the first control device, the ambient energy supply device is enabled to establish an association relationship with the first control device. The first control device may realize management of the ambient energy supply device based on the association relationship established with the ambient energy supply device, thereby effectively avoiding problems such as loss of the ambient energy supply device.

Please refer to FIG. 5, which illustrates a block diagram of a registration apparatus of an ambient energy supply device provided in an embodiment of the present application. The apparatus has the function of implementing the above example of the registration method of the first control device. The function may be implemented by hardware, or may be implemented by hardware executing corresponding software. The apparatus may be the first control device described above, or may be set up in the first control device. As illustrated in FIG. 5, an apparatus 500 may include: a receiving module 510.

The receiving module 510 is configured to receive first information transmitted by the ambient energy supply device, where the first information is used to request access to the first control device, and the first control device is used to perform information interaction with the ambient energy supply device.

In some embodiments, after transmitting the first information to the first control device, the ambient energy supply device enters a sleep state.

In some embodiments, the apparatus further includes a transmitting module (not illustrated in the figure).

The transmitting module is configured to transmit second information to the ambient energy supply device, where the second information is used to accept an access request of the ambient energy supply device, or the second information is used to reject an access request of the ambient energy supply device.

In some embodiments, in a case where the second information is used to accept the access request of the ambient energy supply device, the second information includes at least one of: an access confirmation command, local identification information of the ambient energy supply device, timestamp information of the first control device, power control information, MCS adjustment information, or key exchange information.

In some embodiments, the first information includes timestamp information of the ambient energy supply device, and the apparatus further includes a processing module (not illustrated in the figure).

The processing module is configured to determine, according to the timestamp information of the ambient energy supply device and the timestamp information of the first control device, a clock offset of the ambient energy supply device.

The processing module is further configured to establish and maintain the local identification information of the ambient energy supply device.

In some embodiments, in a case where the second information is used to reject the access request of the ambient energy supply device, the second information includes at least one of: a reject access command, identification information of the ambient energy supply device, or timestamp information of the first control device.

In some embodiments, the transmitting module is further configured to transmit broadcast information, where the broadcast information is periodic information.

In some embodiments, the broadcast information includes at least one of: a broadcast period, timestamp information of the broadcast information, a broadcast message sequence number of the broadcast information, a maximum value of the broadcast message sequence number, a receiving capability of a control device, or transmission power of the broadcast information.

In some embodiments, the first information includes at least one of: an access type, identification information of the ambient energy supply device, an energy level of the ambient energy supply device, timestamp information of the ambient energy supply device, or a sleep time of the ambient energy supply device.

In some embodiments, the first control device is further used to provide energy to the ambient energy supply device; and/or,
the first control device is further used to control at least one energy supply device, where the at least one energy supply device is used to provide energy to the ambient energy supply device.

In the technical solution provided in the embodiments of the present application, since the ambient energy supply device transmits, to the first control device, the first information used to request access to the first control device, the ambient energy supply device is enabled to establish an association relationship with the first control device. The first control device may realize management of the ambient energy supply device based on the association relationship established with the ambient energy supply device, thereby effectively avoiding problems such as loss of the ambient energy supply device.

It should be noted that, when the apparatus provided in the aforementioned embodiments implements its functions, the division of the aforementioned various functional modules is used only as an example for illustration. In practical applications, the aforementioned functions may be allocated to and completed by different functional modules according to actual needs, that is, the internal structure of the device is divided into different functional modules, so as to accomplish all or part of the functions described above.

Regarding the apparatus in the aforementioned embodiments, the specific manner in which each module performs operations has been described in detail in the embodiments related to the method, which will not be repeated here.

Please refer to FIG. 6, which illustrates a schematic structural diagram of an ambient energy supply device provided in an embodiment of the present application. The ambient energy supply device 600 may include: a processor 601, a transceiver 602, and a memory 603. The transceiver 602 is configured to implement transmitting or receiving functions, for example, to implement the function of the aforementioned transmitting module 410, and the processor 601 may be configured to implement other processing functions or control transmission and/or reception, for example, to implement the function of the aforementioned processing module.

The processor 601 includes one or more processing cores, and the processor 601 executes various functional applications and information processing by running software programs and modules.

The transceiver 602 may include a receiver and a transmitter. For example, the receiver and transmitter may be implemented as the same wireless communication component, and the wireless communication component may include a wireless communication chip and a radio frequency antenna.

The memory 603 may be connected to the processor 601 and the transceiver 602.

The memory 603 may be configured to store a computer program executed by the processor, and the processor 601 is configured to execute the computer program to implement the various steps in the aforementioned method embodiments.

In some embodiments, the transceiver 602 is configured to transmit first information to a first control device, where the first information is used to request access to the first control device, and the first control device is used to perform information interaction with the ambient energy supply device.

For details not specified in this embodiment, please refer to the aforementioned embodiments, which will not be repeated here.

Additionally, the memory may be implemented by any type of volatile or non-volatile storage devices, or a combination thereof, the volatile or non-volatile storage devices include, but are not limited to: a magnetic disk or an optical disc, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

Please refer to FIG. 7, which illustrates a schematic structural diagram of a first control device provided in an embodiment of the present application. The first control device 700 may include: a processor 701, a transceiver 702, and a memory 703. The processor 701 is configured to implement the function of the aforementioned processing module, and the transceiver 702 is configured to implement the function of the aforementioned receiving module 510.

The processor 701 includes one or more processing cores, and the processor 701 performs various functional applications and information processing by running software programs and modules. The processor 701 is configured to perform the steps performed by the first control device other than the transmitting and receiving steps in the aforementioned method embodiments.

The transceiver 702 may include a receiver and a transmitter. For example, the receiver and the transmitter may be implemented as the same wireless communication component, and the wireless communication component may include a wireless communication chip and a radio frequency antenna. The transceiver 702 is configured to perform the transmitting and/or receiving steps performed by the first control device in the aforementioned method embodiments.

The memory 703 may be connected to the processor 701 and the transceiver 702.

The memory 703 may be configured to store a computer program executed by the processor, and the processor 701 is configured to execute the computer program to implement the various steps in the aforementioned method embodiments.

Additionally, the memory may be implemented by any type of volatile or non-volatile storage devices, or a combination thereof, the volatile or non-volatile storage devices include, but are not limited to: a magnetic disk or an optical disc, an EEPROM, an EPROM, an SRAM, an ROM, a magnetic memory, a flash memory, or a PROM.

In some embodiments, the transceiver 702 is configured to receive first information transmitted by an ambient energy supply device, where the first information is used to request access to the first control device, and the first control device is used to perform information interaction with the ambient energy supply device.

For details not specified in this embodiment, please refer to the preceding embodiments, which will not be repeated here.

The embodiments of the present application further provide a computer-readable storage medium. The storage medium stores a computer program, and the computer program is executed by a processor to implement the registration method of the ambient energy supply device on an ambient energy supply device side, or to implement the registration method of the ambient energy supply device on a first control device side. Optionally, the computer-readable storage medium may include: an ROM, a random-access memory (RAM), solid state drives (SSDs), or an optical disk, etc. The random-access memory may include a resistance random access memory (ReRAM) and a dynamic random access memory (DRAM).

The embodiments of the present application further provide a chip. The chip includes a programmable logic circuit and/or program instructions, and the chip is configured to, when running, implement the registration method of the ambient energy supply device on the ambient energy supply device side, or to implement the registration method of the ambient energy supply device on the first control device side.

The embodiments of the present application further provide a computer program product. The computer program product includes a computer program, and the computer program is stored in a computer-readable storage medium. A processor obtains the computer program from the computer-readable storage medium and executes the computer program to implement the registration method of the ambient energy supply device on the ambient energy supply device side, or to implement the registration method of the ambient energy supply device on the first control device side.

It should be understood that the term "indicate/indicated/indicating/indication" mentioned in the embodiments of the present application may refer to a direct indication, an indirect indication, or may represent that there is an association relationship. As an example, if A indicates B, it may mean that A directly indicates B, for example, B can be acquired through A; or it may mean that A indicates B indirectly, for example, A indicates C, and B can be acquired through C; or it may mean that there is an association relationship between A and B.

In the description of the embodiments of the present application, the term "correspond/corresponding/correspondence" may mean that there is a direct correspondence or an indirect correspondence between two elements, or may mean that there is an association relationship between the two elements, or may mean a relationship such as indicating and being indicated, or configuring and being configured.

In some embodiments of the present application, "predefined" or "preconfigured" may be implemented by pre-storing corresponding codes, tables, or other means that may indicate relevant information in devices (e.g., including ambient energy supply devices and APs). The present application does not limit the specific implementation method. For example, predefined may refer to what is defined in the protocol.

In some embodiments of the present application, the "protocol" may refer to standard protocols in the field of communication, such as an LTE protocol, an NR protocol, and related protocols applied in future communication systems, which are not limited in the present application.

The term "a plurality of" or "multiple" mentioned herein refers to two or more. The term "and/or" herein describes an association relationship between associated objects, which indicates that there may be three kinds of relationships. For example, "A and/or B" may indicate three cases where: A exists alone, both A and B exist, and B exists alone. A character "/" herein generally indicates that the associated objects before and after this character are in an "or" relationship.

The term "greater than or equal to" mentioned herein may represent "greater than or equal to", or "greater than", and "less than or equal to" may represent "less than or equal to", or "less than".

Additionally, the step numbers described herein merely illustrate an example of a possible execution order among the steps. In some other embodiments, the steps may also be performed in an order different from the numbered sequence, such as two differently numbered steps being performed simultaneously, or two differently numbered steps being performed in the reverse order of the order illustrated in the figures, which is not limited in the embodiments of the present application.

Those skilled in the art should be aware that, in one or more of the above examples, the functions described in the embodiments of the present application may be implemented by hardware, software, firmware, or any combination thereof. When implemented by software, these functions may be stored on a computer-readable medium or transmitted as one or more instructions or code on a computer-readable medium. The computer-readable medium includes computer storage medium and communication medium, where the communication medium includes any medium that facilitates the transfer of a computer program from one place to another. The storage medium may be any available medium that may be accessed by a general-purpose computer or a dedicated computer.

The above descriptions are merely exemplary embodiments of the present application and are not intended to limit the present application. Any modification, equivalent substitutions, and improvements made within the spirit and principles of the present application shall fall within the protection scope of the present application.

## Claims

1. A registration method of an ambient energy supply device, performed by the ambient energy supply device and comprising:
transmitting first information to a first control device, wherein the first information is used to request access to the first control device, and the first control device is used to perform information interaction with the ambient energy supply device.

2. The method according to claim 1, wherein after transmitting the first information to the first control device, the ambient energy supply device enters a sleep state.

3. The method according to claim 1 or 2, wherein after transmitting the first information to the first control device, the method further comprises:
receiving second information transmitted by the first control device, wherein the second information is used to accept an access request of the ambient energy supply device, or the second information is used to reject an access request of the ambient energy supply device.

4. The method according to claim 3, wherein in a case where the second information is used to accept the access request of the ambient energy supply device, the second information comprises at least one of: an access confirmation command, local identification information of the ambient energy supply device, timestamp information of the first control device, power control information, modulation and coding scheme (MCS) adjustment information, or key exchange information.

5. The method according to claim 4, further comprising:
calibrating a local clock according to the timestamp information of the first control device;
adjusting transmission power of third information according to the power control information, wherein the third information is used for information interaction with the first control device;
adjusting a modulation and coding manner of the third information according to the MCS adjustment information; and
encrypting data according to the key exchange information.

6. The method according to claim 3, wherein in a case where the second information is used to reject the access request of the ambient energy supply device, the second information comprises at least one of: a reject access command, identification information of the ambient energy supply device, or timestamp information of the first control device.

7. The method according to claim 6, further comprising:
transmitting fourth information to a second control device, wherein the fourth information is used to request access to the second control device, and the second control device and the first control device are different control devices.

8. The method according to claim 6 or 7, wherein in a case where a second control device does not exist, or in a case where a control device that accepts the access request of the ambient energy supply device does not exist, the ambient energy supply device enters a sleep state, and the second control device and the first control device are different control devices.

9. The method according to any one of claims 1 to 8, wherein before transmitting the first information to the first control device, the method further comprises:
in a case where an energy level of the ambient energy supply device reaches a first threshold, receiving, by the ambient energy supply device, broadcast information respectively transmitted by at least one control device, wherein the broadcast information is periodic information; and
determining, based on the broadcast information respectively transmitted by the at least one control device, the first control device in the at least one control device.

10. The method according to claim 9, wherein the broadcast information comprises at least one of: a broadcast period, timestamp information of the broadcast information, a broadcast message sequence number of the broadcast information, a maximum value of the broadcast message sequence number, a receiving capability of the control device, or transmission power of the broadcast information.

11. The method according to claim 10, wherein determining, based on the broadcast information respectively transmitted by the at least one control device, the first control device in the at least one control device comprises:
determining, based on respective transmission power corresponding to each piece of broadcast information, a respective path loss corresponding to the each piece of broadcast information; and
determining, based on the respective path loss corresponding to the each piece of broadcast information, the first control device in the at least one control device, and determining transmission power of the first information.

12. The method according to claim 11, further comprising:
calibrating a local clock based on the timestamp information of the broadcast information.

13. The method according to any one of claims 9 to 12, wherein transmitting the first information to the first control device comprises:
among N consecutive pieces of broadcast information transmitted by the first control device and received by the ambient energy supply device, in a case where there are M pieces of broadcast information successfully parsed, transmitting the first information to the first control device, wherein M is a positive integer less than or equal to N, and N is a positive integer.

14. The method according to any one of claims 1 to 13, wherein the first information comprises at least one of: an access type, identification information of the ambient energy supply device, an energy level of the ambient energy supply device, timestamp information of the ambient energy supply device, or a sleep time of the ambient energy supply device.

15. The method according to any one of claims 1 to 14, wherein the first control device is further used to provide energy to the ambient energy supply device; and/or,
the first control device is further used to control at least one energy supply device, wherein the at least one energy supply device is used to provide energy to the ambient energy supply device.

16. A registration method of an ambient energy supply device, performed by a first control device and comprising:
receiving first information transmitted by the ambient energy supply device, wherein the first information is used to request access to the first control device, and the first control device is used to perform information interaction with the ambient energy supply device.

17. The method according to claim 16, wherein after transmitting the first information to the first control device, the ambient energy supply device enters a sleep state.

18. The method according to claim 16 or 17, wherein after receiving the first information transmitted by the ambient energy supply device, the method further comprises:
transmitting second information to the ambient energy supply device, wherein the second information is used to accept an access request of the ambient energy supply device, or the second information is used to reject an access request of the ambient energy supply device.

19. The method according to claim 18, wherein in a case where the second information is used to accept the access request of the ambient energy supply device, the second information comprises at least one of: an access confirmation command, local identification information of the ambient energy supply device, timestamp information of the first control device, power control information, modulation and coding scheme (MCS) adjustment information, or key exchange information.

20. The method according to claim 19, wherein the first information comprises timestamp information of the ambient energy supply device, the method further comprises:
determining, according to the timestamp information of the ambient energy supply device and the timestamp information of the first control device, a clock offset of the ambient energy supply device; and
establishing and maintaining the local identification information of the ambient energy supply device.

21. The method according to claim 18, wherein in a case where the second information is used to reject the access request of the ambient energy supply device, the second information comprises at least one of: a reject access command, identification information of the ambient energy supply device, or timestamp information of the first control device.

22. The method according to any one of claims 16 to 21, further comprising:
transmitting broadcast information, wherein the broadcast information is periodic information.

23. The method according to claim 22, wherein the broadcast information comprises at least one of: a broadcast period, timestamp information of the broadcast information, a broadcast message sequence number of the broadcast information, a maximum value of the broadcast message sequence number, a receiving capability of a control device, or transmission power of the broadcast information.

24. The method according to any one of claims 16 to 23, wherein the first information comprises at least one of: an access type, identification information of the ambient energy supply device, an energy level of the ambient energy supply device, timestamp information of the ambient energy supply device, or a sleep time of the ambient energy supply device.

25. The method according to any one of claims 16 to 24, wherein the first control device is further used to provide energy to the ambient energy supply device; and/or,
the first control device is further used to control at least one energy supply device, wherein the at least one energy supply device is used to provide energy to the ambient energy supply device.

26. A registration apparatus of an ambient energy supply device, comprising:
a transmitting module, configured to transmit first information to a first control device, wherein the first information is used to request access to the first control device, and the first control device is used to perform information interaction with the ambient energy supply device.

27. The apparatus according to claim 26, wherein after transmitting the first information to the first control device, the ambient energy supply device enters a sleep state.

28. The apparatus according to claim 26 or 27, further comprising:
a receiving module, configured to receive second information transmitted by the first control device, wherein the second information is used to accept an access request of the ambient energy supply device, or the second information is used to reject an access request of the ambient energy supply device.

29. The apparatus according to claim 28, wherein in a case where the second information is used to accept the access request of the ambient energy supply device, the second information comprises at least one of: an access confirmation command, local identification information of the ambient energy supply device, timestamp information of the first control device, power control information, modulation and coding scheme (MCS) adjustment information, or key exchange information.

30. The apparatus according to claim 29, further comprising:
a processing module, configured to calibrate a local clock according to the timestamp information of the first control device,
wherein the processing module is further configured to adjust transmission power of third information according to the power control information, wherein the third information is used for information interaction with the first control device;
the processing module is further configured to adjust a modulation and coding manner of the third information according to the MCS adjustment information; and
the processing module is further configured to encrypt data according to the key exchange information.

31. The apparatus according to claim 28, wherein in a case where the second information is used to reject the access request of the ambient energy supply device, the second information comprises at least one of: a reject access command, identification information of the ambient energy supply device, or timestamp information of the first control device.

32. The apparatus according to claim 31, wherein the transmitting module is further configured to transmit fourth information to a second control device, wherein the fourth information is used to request access to the second control device, and the second control device and the first control device are different control devices.

33. The apparatus according to claim 31 or 32, wherein in a case where a second control device does not exist, or in a case where a control device that accepts the access request of the ambient energy supply device does not exist, the ambient energy supply device enters a sleep state, and the second control device and the first control device are different control devices.

34. The apparatus according to any one of claims 26 to 33, further comprising:
a receiving module, configured to, in a case where an energy level of the ambient energy supply device reaches a first threshold, the ambient energy supply device receives broadcast information respectively transmitted by at least one control device, wherein the broadcast information is periodic information; and
a processing module, configured to determine, based on the broadcast information respectively transmitted by the at least one control device, the first control device in the at least one control device.

35. The apparatus according to claim 34, wherein the broadcast information comprises at least one of: a broadcast period, timestamp information of the broadcast information, a broadcast message sequence number of the broadcast information, a maximum value of the broadcast message sequence number, a receiving capability of the control device, or transmission power of the broadcast information.

36. The apparatus according to claim 35, wherein the processing module is configured to determine, based on respective transmission power corresponding to each piece of broadcast information, a respective path loss corresponding to the each piece of broadcast information; and determine, based on the respective path loss corresponding to the each piece of broadcast information, the first control device in the at least one control device, and determine transmission power of the first information.

37. The apparatus according to claim 36, wherein the processing module is further configured to calibrate a local clock based on the timestamp information of the broadcast information.

38. The apparatus according to any one of claims 34 to 37, wherein the transmitting module is configured to: among N consecutive pieces of broadcast information transmitted by the first control device and received by the ambient energy supply device, in a case where there are M pieces of broadcast information successfully parsed, transmit the first information to the first control device, wherein M is a positive integer less than or equal to N, and N is a positive integer.

39. The apparatus according to any one of claims 26 to 38, wherein the first information comprises at least one of: an access type, identification information of the ambient energy supply device, an energy level of the ambient energy supply device, timestamp information of the ambient energy supply device, or a sleep time of the ambient energy supply device.

40. The apparatus according to any one of claims 26 to 39, wherein the first control device is further used to provide energy to the ambient energy supply device; and/or,
the first control device is further used to control at least one energy supply device, wherein the at least one energy supply device is used to provide energy to the ambient energy supply device.

41. A registration apparatus of an ambient energy supply device, comprising:
a receiving module, configured to receive first information transmitted by the ambient energy supply device, wherein the first information is used to request access to a first control device, and the first control device is used to perform information interaction with the ambient energy supply device.

42. The apparatus according to claim 41, wherein after transmitting the first information to the first control device, the ambient energy supply device enters a sleep state.

43. The apparatus according to claim 41 or 42, further comprising:
a transmitting module, configured to transmit second information to the ambient energy supply device, wherein the second information is used to accept an access request of the ambient energy supply device, or the second information is used to reject an access request of the ambient energy supply device.

44. The apparatus according to claim 43, wherein in a case where the second information is used to accept the access request of the ambient energy supply device, the second information comprises at least one of: an access confirmation command, local identification information of the ambient energy supply device, timestamp information of the first control device, power control information, modulation and coding scheme (MCS) adjustment information, or key exchange information.

45. The apparatus according to claim 44, wherein the first information comprises timestamp information of the ambient energy supply device, the apparatus further comprises:
a processing module, configured to determine, according to the timestamp information of the ambient energy supply device and the timestamp information of the first control device, a clock offset of the ambient energy supply device,
wherein the processing module is further configured to establish and maintain the local identification information of the ambient energy supply device.

46. The apparatus according to claim 43, wherein in a case where the second information is used to reject the access request of the ambient energy supply device, the second information comprises at least one of: a reject access command, identification information of the ambient energy supply device, or timestamp information of the first control device.

47. The apparatus according to any one of claims 41 to 46, further comprising:
a transmitting module, configured to transmit broadcast information, wherein the broadcast information is periodic information.

48. The apparatus according to claim 47, wherein the broadcast information comprises at least one of: a broadcast period, timestamp information of the broadcast information, a broadcast message sequence number of the broadcast information, a maximum value of the broadcast message sequence number, a receiving capability of a control device, or transmission power of the broadcast information.

49. The apparatus according to any one of claims 41 to 48, wherein the first information comprises at least one of: an access type, identification information of the ambient energy supply device, an energy level of the ambient energy supply device, timestamp information of the ambient energy supply device, or a sleep time of the ambient energy supply device.

50. The apparatus according to any one of claims 41 to 49, wherein the first control device is further used to provide energy to the ambient energy supply device; and/or,
the first control device is further used to control at least one energy supply device, wherein the at least one energy supply device is used to provide energy to the ambient energy supply device.

51. A communication device, comprising: a processor and a memory, wherein a computer program is stored in the memory, and the processor executes the computer program to implement the method according to any one of claims 1 to 15, or to implement the method according to any one of claims 16 to 25.

52. A computer-readable storage medium, having stored therein a computer program, wherein the computer program is configured to be executed by a processor to implement the method according to any one of claims 1 to 15, or to implement the method according to any one of claims 16 to 25.

53. A chip, comprising a programmable logic circuit and/or program instructions, wherein the chip is configured to, when running, implement the method according to any one of claims 1 to 15, or to implement the method according to any one of claims 16 to 25.

54. A computer program product, comprising computer instructions, wherein the computer instructions are stored in a computer-readable storage medium, a processor obtains the computer instructions from the computer-readable storage medium and executes the computer instructions to implement the method according to any one of claims 1 to 15, or to implement the method according to any one of claims 16 to 25.
